# EUROPEAN PATENT APPLICATION

(11) **EP 2 305 386 A2**
(43) Date of publication of application: **06.04.2011**
(21) Application number: 09758518.6
(22) Date of filing: 03.06.2009
(51) Int. Cl.: B04C 1/00

(54) **HYDROCYCLONE FLOTATION SYSTEM AND WATER POLLUTION PREVENTION SYSTEM EQUIPPED WITH THE SAME**

(30) Priority: 03.06.2008 KR 20080052066
(71) Applicant: Korea Aquosys Co., Ltd., Ulsan 681-803 (KR)
(72) Inventor: YANG, Shi Chun, Ulsan 680-042 (KR); CHO, Sung Woong, Ulju-gun Ulsan 689-871 (KR)
(74) Representative: Mammel, Ulrike
(86) International application number: PCT/KR2009/002963
(87) International publication number: WO 2009/148265

(57) **Abstract**

The present invention discloses a hydrocyclone floating separator, comprising: a vortex generating body which includes a water inlet, swirls water introduced through the water inlet, and includes a water outlet discharging the swirled water; an air injection unit for injecting air into water introduced through the water inlet; a drain control unit for controlling the amount of water discharged through the water outlet such that the level of the water in the vortex generating body is maintained constant; and a suspended solids removing unit for taking suspended solids out of the vortex generating body, the suspended solids existing dispersed in water being supplied to the vortex generating body and then floating and gathering towards the center of the vortex of the water surface because of the swirl flow of the water and the buoyancy of air bubbles charged in the water. Thus, the water pollution prevention system comprising the hydrocyclone floating separator can effectively treat suspended solids produced from a process of purifying waste water, sewage, service water, etc., at a relatively low cost.

## Description

### Technical Field

The present invention relates to a hydrocyclone floating separator for separating suspended solids from a liquid and a water pollution prevention system using the hydrocyclone separator.

### Background Art

Recently, due to the aggravation of water pollution, there has been an increasing number of algae generated in lakes or rivers, thus causing various problems such as disrupting the ecosystem and the like. However, since the distribution of algae is widespread and the amount thereof is excessive, completely treating the algae with the current technology is inconceivable.

Methods of removing algae may include a method of killing algae using chemicals and a method of filtering algae using filtering materials. These two methods are convenient algae treatment methods. However, of these two methods, the former can cause the problem of toxic chemicals and the problem of secondary pollution attributable to dead algae, and the latter is difficult to apply because treatment is slow and high cost is required.

Other methods of removing algae may include a coagulating precipitation method of precipitating algae in water and then removing the algae precipitates and a flotation separation method of floating algae onto the water surface to form scum and then removing the scum. The coagulating precipitation method is advantageous in that the process is comparatively easy to carry out, but is problematic in that it takes 2 - 5 hours to precipitate a target object to be treated, thus increasing the scale and cost of facilities and equipment. The flotation separation method is advantageous in that it takes 20 - 50 minutes to float a target object, thus enabling the work to be performed by equipment 1/5 - 1/6 of the capacity of equipment used in the coagulating precipitation method, but is problematic in that an air compressor, a scum removing apparatus and the like must be additionally provided and in that a part of floated scum is submerged when the process is being carried out.

Meanwhile, the coagulating precipitation method and the flotation separation method are also used to separate sludge in water during a waste water treatment process. Even in this case, there are problems similar to the above problems.

### Disclosure

### Technical Problem

The present invention intends to provide a hydrocyclone floating separator for separating suspended solids in water, which can be applied to large-scale target objects, and a water pollution prevention system using the same.

### Technical Solution

An aspect of the present invention provides a hydrocyclone floating separator, comprising: a vortex generating body which includes a water inlet, swirls water introduced through the water inlet to create a swirl flow, and includes a water outlet discharging the swirled water; an air injection unit for injecting air into water introduced through the water inlet; a drain control unit for controlling the amount of water discharged through the water outlet such that a level of a water in the vortex generating body is maintained constant; and a suspended solids removing unit for taking suspended solids out of the vortex generating body, the suspended solids existing dispersed in water being supplied to the vortex generating body and then floating and gathering towards the center of the vortex of the water surface because of the swirl flow of the water and the buoyancy of air bubbles charged in the water.

Here, the vortex generating body may have a shape of a circular cross-section, the water inlet may be a passage of a feed water pipe tangentially provided at a periphery of the vortex generating body, and the water outlet may be a passage of a drain pipe provided at a bottom of the vortex generating body. In this case, the vortex generating body may be provided with a plurality of feed water pipes, each of which is tangentially disposed at the periphery of the vortex generating body. Further, the drain control unit may include a valve.

Further, the suspended solids removing unit may include a suspend solids recovery pipe, and the suspended solids recovery pipe may be disposed such that its inlet corresponds to the center of the swirl flow under the water surface.

Another aspect of the present invention provides a water pollution prevention system, comprising: an intake pump which pumps water from an intake source and transfers the pumped water to a target site; a water supply line through which the water pumped by the intake pump is transferred; a chemical injection unit which injects a chemical into water flowing along the water supply line; and the hydrocyclone floating separator of claim 1 which is provided in the water supply line and which separates various suspended solids from the water mixed with the chemical.

The water pollution prevention system may further include a biological water purification unit which is provided in the water supply line and which biologically treats the raw water flowing to the hydrocylcone floating separator along the water supply line using microorganisms or the like.

### Advantageous Effects

The hydrocyclone floating separator and the water pollution prevention system using the same according to the present invention is advantageous in that suspended solids, such as algae, sludge and the like, included in service water, waste water, sewage water during the purifying process thereof can be efficiently and rapidly removed, so that the cost of equipment and the area of a site can be reduced, with the result that they are economically advantageous and are easy to operate. In particular, since the hydrocyclone floating separator is small in size, when the hydrocyclone floating separator is provided on a ship or a floating body and then operated, water of a polluted lake or river can be directly purified on site in the field.

### Description of Drawings

FIG. 1 is a schematic view showing a water pollution prevention system according to a first embodiment of the present invention;
FIG. 2 is a perspective view of the hydrocyclone floating separator shown in FIG. 1;
FIG. 3 is a conceptual view explaining the principle of the flotation of suspended solids in the hydrocyclone floating separator shown in FIG. 2; and
FIG. 4 is a schematic view showing a water pollution prevention system according to a second embodiment of the present invention.

### <Description of the elements in the drawings>

- 1:: hydrocyclone floating separator
- 10:: vortex generating body
- 12:: feed water pipe
- 14:: suspended solids recovery pipe
- 16:: drain pipe
- 18:: drain control unit
- 30:: intake source
- 32:: intake pump
- 33:: biological water purification unit
- 34:: water supply line
- 36:: stirring apparatus
- 40:: freshwater reservoir
- 50:: air injection unit
- 51:: coagulant injection unit
- 52:: pH adjusting chemical injection unit

### Best Mode

Hereinafter, preferred embodiments of the present invention will be described with reference to the attached drawings.

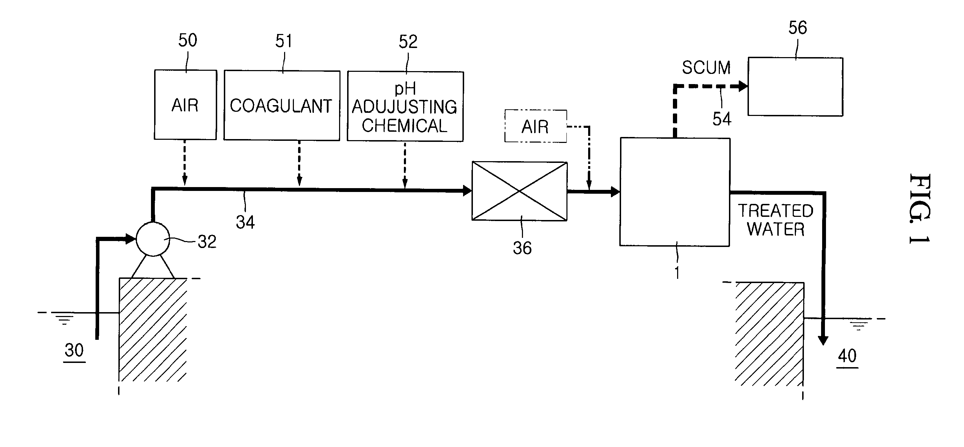

FIG. lis a schematic view showing a water pollution prevention system according to a first embodiment of the present invention. As shown in FIG. 1, the water pollution prevention system according to the first embodiment of the present invention includes: an intake pump 32 provided around an intake source 30 and pumping water (hereinafter, raw water) of the intake source 30; a water supply line 34 through which the raw water pumped by the intake pump 32 is transferred to a freshwater reservoir 40 which will contain this raw water; an air injection unit 50, a coagulant injection unit 51 and a pH adjusting chemical injection unit 52 for injecting air, a coagulant and a pH adjusting chemical into the raw water flowing along the water supply line 34; a stirring apparatus 36 for mixing the air, the coagulant and the pH adjusting chemical with raw water; and a hydrocyclone floating separator for separating various suspended solids (algae and the like) from the raw water mixed with the air, the coagulant and the pH adjusting chemical by the stirring apparatus 36 using flotation. This water pollution prevention system may further include a scum storage unit 56. In this case, the intake source 30 may be a river or lake, and the freshwater reservoir 40 may be another river or lake or an artificial water tank. Further, the intake source 30 may be the freshwater reservoir 40.

The intake pump 32 provides the pressure necessary to pump raw water out of the intake source 30 and transfer this raw water to the freshwater reservoir 40.

The water supply line 34 through which raw water flows may be a pressure-resistant steel pipe or an open type pipe (for example: U-shaped pipe) whose upper portion is open.

This water supply line 34 is sequentially combined with the air injection unit 50, the coagulant injection unit 51, the pH adjusting chemical injection unit 52, the stirring apparatus 36 and the hydrocyclone floating separator 1 along the direction of flow of raw water. Here, the air injection unit 50, as represented by a dash-dot-dotted line of FIG. 1, may be disposed between the stirring apparatus and the hydrocyclone floating separator 1. Further, if necessary, the water pollution prevention system may be additionally provided with one or more transfer pumps.

The air injection unit 50, which includes an air compressor, a compressed air storage tank, a pressure regulator and a flow controller, can provide compressed air and easily control the pressure and amount of the compressed air. Further, the air injection unit 50 may be configured such that pressurized water in which compressed air is previously dissolved is injected.

The coagulant injection unit 51 injects a coagulant into raw water, and the pH adjusting chemical injection unit 52 injects a pH adjusting chemical into the raw water. Further, if necessary to treat the raw water, other chemical injection units may be additionally provided.

The coagulant injection unit 51 may include a coagulant dissolving tank, a coagulant solution storage tank and an injection pump. In this case, preferably, the injection pump may be a quantitative injection pump. When this quantitative injection pump is used, a liquid coagulant can be provided, and the amount of the injected coagulant can be freely determined. The coagulant may be an organic coagulant or an inorganic coagulant or may be a combination thereof. Further, the coagulant injection unit 51 may be configured such that it injects a pH adjusting chemical together with a coagulant without additionally providing the pH adjusting chemical injection unit 52.

The stirring apparatus 36 includes an impeller and means for rotating the impeller. The means for rotating the impeller includes a motor. For reference, since the raw water in the water supply line 34 is to be in a turbulent state, a part of the water supply line 34 may be arbitrarily bent into a zigzag shape to accelerate the formation of the turbulent flow, and, when the turbulent flow is sufficiently formed, the stirring apparatus 36 may not be provided.

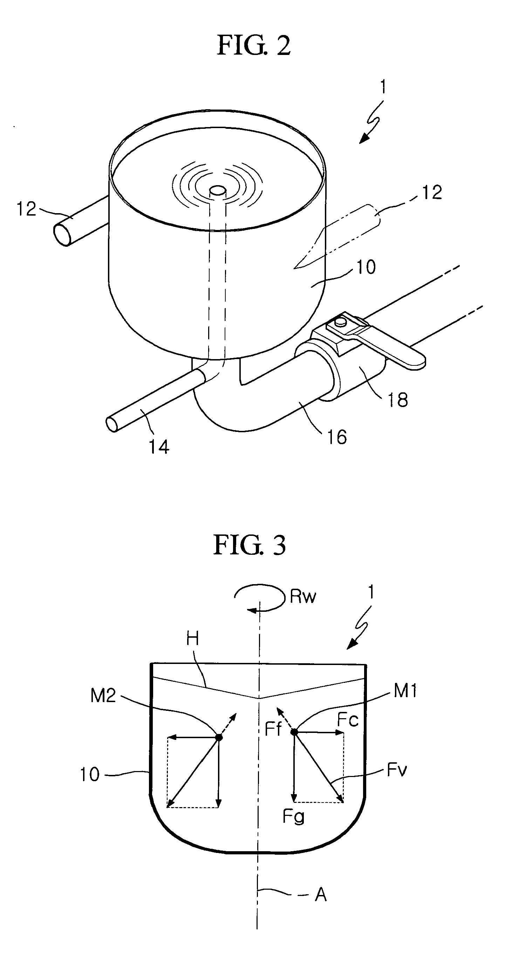

FIG. 2 is a perspective view of the hydrocyclone floating separator 1 shown in FIG. 1.

The hydrocyclone floating separator 1 serves to remove suspended solids from raw water by allowing air bubbles formed from air-supersaturated raw water or air bubbles forcibly charged in raw water to adsorb suspended solids to cause the suspended solids to float onto the surface of the raw water. As shown in FIG. 2, the hydrocyclone floating separator 1 includes a vortex generating body 10, an air injection unit, a drain control unit 18 and a suspended solids removing unit.

The vortex generating body 10 has a cylindrical structure having a circular section such that water swirls in a constant direction. The vortex generating body is tangentially provided at the periphery thereof with a feed water pipe 12, and is provided at the bottom thereof with a drain pipe 16. In this case, if necessary, two or more feed water pipes 12 may be provided to form stable swirl flow. The two or more feed water pipes 12 are tangentially disposed at the periphery of the vortex generating body 10 at regular intervals.

The air injection unit injects air into raw water supplied to the vortex generating body 10. This air injection unit may be additionally provided, but the above-mentioned air injection unit 50 may be used as this air injection unit.

The drain control unit 18, which may be a flow control valve provided in the drain pipe 16, serves to maintain the water level in the vortex generating body 10 constant by controlling the amount of water discharged through the drain pipe 16. For this purpose, if necessary, the drain control unit 18 may be provided with a water level sensor.

The suspended solids removing unit serves to remove suspended solids, that is, scum, the suspended solids existing dispersed in water being supplied to the vortex generating body 10 and then floating and gathering toward the center of the vortex of the water surface because of the swirl flow of the water and the buoyancy of air bubbles charged in the water. The suspended solids removing unit includes a suspended solids recovery pipe 14. The suspended solids recovery pipe 14 is disposed such that its inlet corresponds to the center of the swirl flow under the surface of the water, its outlet passes through the drain pipe 16 to be exposed to the outside, and the section between its inlet and outlet is straight and it is located at the center of the swirl flow.

FIG. 3 is a conceptual view explaining the principle of the flotation of suspended solids in the hydrocyclone floating separator 1 shown in FIG. 2. Hereinafter, the dynamic actions that occur when the swirl flow is generated by simultaneously supplying suspended solids (hereinafter, exemplified by sludge particles) and water to the hydrocyclone floating separator 1 will be described.

In the vortex generating body 10 in which the swirl flow is generated, a sludge particle M1 receives gravitational force Fg and centrifugal force Fc applied from the rotation center A of the swirl flow to the outside. As a result, the sludge particle M1 receives a resultant force Fv which is a sum of the two force vectors. In this case, since the sludge particle M1 receives the same force at the same position, if the average density of the sludge particle M1 becomes greater than that of water once they have adsorbed air bubbles, this sludge particle M1 receives a buoyant force Ff in a direction opposite to the resultant force Fv and then floats toward the rotation center A of the swirl flow. Since this buoyant force Ff is greater than the ordinary buoyant force by Fv/Fg times, the floating speed of the sludge particle M1 becomes more rapid. Meanwhile, the action of another sludge particle M2 is the same as that of the sludge particle M1. Even in this case, since the force of buoyancy is slantingly applied toward the center of rotation A of the swirl flow, finally, sludge particles in water gather toward the place at which the center of the rotation A of the swirl flow joins with the water surface H.

Owing to the above principle, the hydrocyclone floating separator 1 can easily gather suspended solids dispersed in water together at one place, and can easily discharge them to the outside through the suspended solids recovery pipe 14.

Meanwhile, the scum gathered in this way is stored in the scum storage unit, and is then directly treated or is finally treated after a concentration process. On the other hand, the purified treated water formed by removing suspended solids from raw water is transferred to the freshwater reservoir 40 directly or through a sand filter or a sterilizer and is then utilized.

The above-mentioned water pollution prevention system according to the first embodiment of the present invention is operated as follows. Raw water of the intake source 30 is pumped by the intake pump 32 and is then transferred to the freshwater reservoir 40 along the water supply line 34. In this procedure, the coagulant injection unit 51 injects a coagulant into the raw water, and the pH adjusting chemical injection unit injects a pH adjusting chemical into raw water. In this case, the injected coagulant is combined with suspended solids included in raw water to form flocs thus to enable suspended solids to easily float, and the injected pH adjusting chemical help the formation of flocs. The air injection unit 50 injects air into raw water. In this case, supersaturated air is dissolved in the raw water flowing along the water supply line 24 under ordinary pressure, and a part of the supersaturated air is dispersed in the raw water as small-sized particles. Thereafter, the raw water containing air, a coagulant and a pH adjusting chemical is stirred by the turbulent flow formed in the water supply line 24 as the raw water is being transferred or, if necessary, is forcibly stirred by the stirring apparatus 36 to form a mixed solution, and then the mixed solution flows to the hydrocyclone floating separator 1.

The mixed solution in which air, a coagulant and a pH adjusting chemical are uniformly mixed reaches the hydrocyclone floating separator 1, and then includes air bubbles formed in the vortex generating body 10 at low temperature and slow flow velocity, and the suspended solids are floated onto the water surface by gravitational force and the rotational force of the swirl flow to form scum. The floating scum gathers at the center of the swirl flow, and is then discharged to the scum storage unit 56 through the suspended solids recovery pipe 14, and is then separately treated. The refined treated water formed by removing suspended solids from raw water is transferred to the freshwater reservoir 40 directly or through a sand filter or a sterilizer and is then utilized.

In the above description, the ratio of air to suspended solids in the raw water may be about 0.05 ∼ 0.2, the size of the vortex generating body may be such that mixed water existss therein for about 10 - 25 minutes, and the rising speed of air bubbles may be about 20 - 100 mm/min.

Meanwhile, in order to increase the solid-liquid separation effect of raw water containing a large amount of algae, it is preferred that poly aluminum chloride, based on a 17% solution, be used as the coagulant at a concentration of 10 - 20 ppm. Thus, for the purpose of improving efficiency, a polymer coagulant for wastewater treatment may be added at a concentration of 0.2 - 1.0 ppm. Further, instead of poly aluminum chloride, aluminum sulfate or ferric chloride, which has low performance but is cheap, may be introduced into the raw water together with an alkali solution such as a caustic soda solution to obtain the desired effects. That is, various methods may be used to accomplish the above purpose.

As described above, the water pollution prevention system according to the first embodiment of the present invention enables suspended solids (for example, algae) included in the raw water of the intake source 30 to be efficiently removed. Further, the water pollution prevention system according to this embodiment can be loaded on a moving vehicle such as a ship (or is floated on the water surface by a buoyant body) floating on the water of a river or lake when it is utilized to directly perform water purification, because its facilities are comparative small in size.

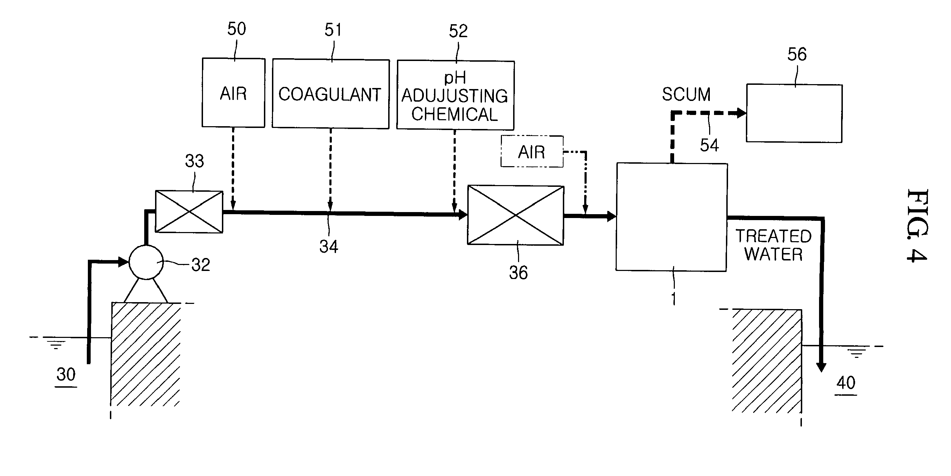

FIG. 4 is a schematic view showing a water pollution prevention system according to a second embodiment of the present invention. The water pollution prevention system according to the second embodiment is a water pollution prevention system for preventing the water pollution attributable to seriously contaminated water such as waste water, sewage or the like. As shown in FIG. 4, comparing the water pollution prevention system according to the second embodiment with the above water pollution prevention system according to the first embodiment, the constitution and operation of the water pollution prevention systems are the same, but the water pollution prevention system according to the second embodiment is different from the above water pollution prevention system according to the first embodiment in that it further includes a biological water purification unit 33 which biologically treats the raw water flowing to the hydrocyclone floating separator 1 using microorganisms or the like. In this case, an example of the biological water purification unit 33 may be treatment equipment which can realize an activated sludge method.

Although the preferred embodiments of the present invention have been described as above, the present invention is not limited to the embodiments disclosed in this specification and the attached drawings. Therefore, the present invention may be variously modified by those skilled in the art within the scope of the technical idea of the present invention.

For example, it has been described as above that the inlet of the suspended solids recovery pipe 14 of the suspended solids removing unit is disposed under the water surface in the vortex generating body 10, but the suspended solids recovery pipe 14 may be configured such that its inlet is flush with the water surface so that scum can be extracted using a pump.

Further, in the above description, the hydrocyclone floating separator 1 using the principle of flotation is used as a means for separating suspended solids from raw water, but the means for separating suspended solids from raw water may be an apparatus for precipitating suspended solids and discharging these precipitates using a sludge discharge pipe, and thus a sludge storage unit may be used as the scum storage unit 56. This apparatus can be advantageously applied when most of the suspended solids included in the raw water are inorganic particles such as muddy water compared to when they are algae, because it removes suspended solids by precipitating them.

## Claims

1. A hydrocyclone floating separator, comprising:
a vortex generating body which includes a water inlet, swirls water introduced through the water inlet to create a swirl flow, and includes a water outlet discharging the swirled water;
an air injection unit for injecting air into water introduced through the water inlet;
a drain control unit for controlling the amount of water discharged through the water outlet such that a level of a water in the vortex generating body is maintained constant; and
a suspended solids removing unit for taking suspended solids out of the vortex generating body, the suspended solids existing dispersed in water being supplied to the vortex generating body and then floating and gathering towards the center of the vortex of the water surface because of the swirl flow of the water and the buoyancy of air bubbles charged in the water.

2. The hydrocyclone floating separator according to claim 1, wherein the vortex generating body has a shape of a circular cross-section, the water inlet is a passage of a feed water pipe tangentially provided at a periphery of the vortex generating body, and the water outlet is a passage of a drain pipe provided at a bottom of the vortex generating body.

3. The hydrocyclone floating separator according to claim 2, wherein the vortex generating body is provided with a plurality of the feed water pipes, each of which is tangentially disposed at the periphery of the vortex generating body.

4. The hydrocyclone floating separator according to claim 2, wherein the drain control unit includes a valve.

5. The hydrocyclone floating separator according to claim 1, wherein the suspended solids removing unit includes a suspend solids recovery pipe, and the suspended solids recovery pipe is disposed such that its inlet corresponds to the center of the swirl flow under the water surface.

6. A water pollution prevention system, comprising:
an intake pump which pumps water from an intake source and transfers the pumped water to a target site;
a water supply line through which the water pumped by the intake pump is transferred;
a chemical injection unit which injects a chemical into the water flowing along the water supply line; and
the hydrocyclone floating separator of claim 1 which is provided in the water supply line and which separates various suspended solids from the water mixed with the chemical.
